# EUROPÄISCHE PATENTSCHRIFT

(11) **EP 3 491 273 B1**
(45) Veröffentlichungstag und Bekanntmachung des Hinweises auf die Patenterteilung: **29.04.2020**
(21) Anmeldenummer: 17752010.3
(22) Anmeldetag: 14.07.2017
(51) Int. Cl.: F16H 3/72

(54) **ANTRIEBSVORRICHTUNG MIT ÜBERLAGERUNGSGETRIEBE**
DRIVE DEVICE WITH SPEED MODULATION GEARBOX
DISPOSITIF D'ENTRAÎNEMENT MUNI D'UN ENGRENAGE DE SUPERPOSITION

(30) Priorität: 26.07.2016 DE 102016213639; 23.02.2017 DE 102017103696
(43) Veröffentlichungstag der Anmeldung: 05.06.2019
(73) Patentinhaber: Voith Patent GmbH, 89522 Heidenheim (DE)
(72) Erfinder: STOLZ, Tobias, 74589 Satteldorf (DE); STEINER, Stefan, 91583 Schillingsfürst (DE); BURKHARDT, Ralph, 74613 Öhringen (DE)
(74) Vertreter: Voith Patent GmbH - Patentabteilung
(86) Internationale Anmeldenummer: PCT/EP2017/067830
(87) Internationale Veröffentlichungsnummer: WO 2018/019613

(56) Entgegenhaltungen:
- DE-A1-102014 210 869
- US-A1- 2005 064 974
- US-A1- 2008 227 576
- US-A1- 2011 042 155

## Beschreibung

Die Erfindung betrifft eine Antriebsvorrichtung umfassend ein Überlagerungsgetriebe mit einem Planetengetriebe und einem Gehäuse, eine Hauptantriebsmaschine, die mit einer Eingangswelle des Überlagerungsgetriebes verbunden ist, zwei Nebenantriebe, die über je eine Triebverbindung mit dem Planetengetriebe verbunden sind, eine Ausgangswelle des Überlagerungsgetriebes, welche mit einer Arbeitsmaschine verbunden werden kann, wobei das Planetengetriebe ein Hohlrad, ein Sonnenrad, einen Planetenträger und mehrere Planetenrädern aufweist (siehe US 2011/042155 A).

Bei einem Überlagerungsgetriebe werden allgemein mindestens zwei Wellen des Planetengetriebes durch voneinander unabhängige Antriebe so angetrieben, dass die Drehzahlen an einer weiteren Welle, der Ausgangswelle, addiert oder subtrahiert werden. Ist einer der Antriebe regelbar, dann kann so eine stufenlose Drehzahlregelung für die Ausgangswelle erreicht werden. Im vorliegenden Fall werden zwei Wellen angetrieben, wobei eine Welle von der Hauptantriebsmaschine angetrieben wird und eine Welle von den zwei drehzahlregelbaren Nebenantrieben angetrieben wird. An der dritten Welle der Ausgangswelle ist eine Arbeitsmaschine angeschlossen.

Aus dem Stand der Technik sind Antriebsvorrichtungen mit einem Überlagerungsgetriebe bekannt, bei dem eine Hauptantriebsmaschine über die Eingangswelle das Hohlrad eines Planetengetriebes und ein regelbarer Nebenantrieb über eine Getriebestufe den Planetenträger antreibt, während die Arbeitsmaschine über die Ausgangswelle mit der Sonne verbunden ist. Durch eine solche Antriebsvorrichtung kann die Drehzahl an der Ausgangswelle in einem recht großen Drehzahlbereich stufenlos eingestellt werden und das bei konstant laufender Hauptantriebsmaschine.

Des Weiteren ist es möglich, die Hauptantriebsmaschine lastfrei anzuschleppen, indem der Nebenantrieb beim Hochlaufen jeweils die Drehzahl der Hauptantriebsmaschine einprägt. Erst wenn die Hauptantriebsmaschine in der Nähe der Nenndrehzahl ist und damit ein hohes Drehmoment aufbringen kann, wird die Last langsam beschleunigt, indem die Kompensation der Drehzahl durch den Nebenantrieb reduziert wird.

Eine konkrete Ausführung mit zwei Nebenantrieben, die jeweils eine separate Triebverbindung zum Planetengetriebe aufweisen, ist beispielsweise in der Schrift DE 102015107934 A1 gezeigt, die erst nach dem vorliegendem Prioritätsdatum veröffentlicht wurde. Zum Schutz vor Beschädigung sind diverse Kupplungen und Bremsen an den Nebenantrieben und an der Hauptantriebsmaschine vorhanden.

Genutzt werden solche Antriebsvorrichtungen insbesondere zum Antreiben von Pumpen, Verdichtern oder Kompressoren mit großer Leistung, wie sie zum Beispiel in der Öl- und Gasindustrie oder in thermischen Kraftwerken verwendet werden.

Diese Antriebsvorrichtungen haben allerdings den Nachteil, dass sie im Störfall recht unflexibel sind und der Planetenträger nicht vor Überdrehzahl geschützt ist, wenn die Hauptantriebsmaschine im Betrieb ausfällt oder vom Netz getrennt werden muss. In solch einem Fall führt die hohe Massenträgheit der Antriebsmaschine, welche meist viel größer als die der angetriebenen Arbeitsmaschine ist, dazu, dass Planetenträger und die Nebenantriebe stark beschleunigt werden. Dabei können unzulässig hohe Drehzahlen an mechanischen und elektrischen Komponenten, zum Beispiel am Planetenträger, auftreten und diese beschädigen. Die im Stand der Technik vorhandenen Kupplungen können nur die Nebenantriebe abkoppeln und damit vor Überdrehzahl schützen.

Die Aufgabe der Erfindung ist es nun, eine verbesserte Lösung zu finden, so dass die genannte Antriebsvorrichtung unter anderem im Störfall zuverlässiger und zudem günstiger ausgeführt werden kann. Insbesondere für die Nachrüstung in bestehenden Anlagen soll eine wirkungsgradverbessernde Drehzahlregelung mit optimaler Anpassung an die vorgegebenen Bedingungen erzielt werden.

Die Aufgabe wird durch eine Antriebsvorrichtung gemäß Anspruch 1 gelöst. Weitere vorteilhafte Merkmale der erfindungsgemäßen Ausführung, die die Vorrichtung noch zusätzlich verbessern, finden sich in den entsprechenden Unteransprüchen. Die erfindungsgemäße Antriebsvorrichtung wird dabei so ausgeführt, dass zwischen den Nebenantrieben und der Eingangswelle oder zwischen den Nebenantrieben und der Abtriebswelle des Planetengetriebes je Nebenantrieb eine zusätzliche Triebverbindung mit konstanter Übersetzung besteht, welche so ausgeführt sind, dass diese über je eine vorhandene Schaltkupplung getrennt oder verbunden werden kann. Dabei ist es wichtig, dass die Triebverbindungen zwischen den Nebenantrieben und dem Planetengetriebe unabhängig von der Schaltung der Kupplungen verbunden bleiben. Die beiden zusätzlichen Triebverbindungen können dabei auf ein gemeinsames Stirnrad auf der Eingangswelle oder auf der Abtriebswelle einwirken.

Durch die zusätzlichen Triebverbindungen kann bei ausgefallener Hauptantriebsmaschine ein Notbetrieb über die Nebenantriebe ermöglicht werden oder bei kleinen Drehzahlen kann die Vorrichtung alleine mit den Nebenantrieben angefahren und betrieben werden. Besonders vorteilhaft ist, dass die Antriebsvorrichtung bei Störung der Hauptantriebsmaschine kontrolliert heruntergefahren werden kann, indem ein Großteil der Energie durch Umbeschleunigung der Nebenantriebe verzehrt wird. Dazu können die Kupplungen gezielt verzögert geschaltet werden, um die Kupplungen möglichst wenig zu belasten. Eine kritische Überdrehzahl der Nebenantriebe oder des Planetenträgers wird damit wirksam verhindert.

Dadurch, dass zwei zusätzliche Triebverbindungen mit je einer Schaltkupplung vorgesehen sind, können die einzelnen Komponenten und insbesondere die Schaltkupplungen deutlich kleiner und damit günstiger und bauraumsparender ausgelegt werden.

Im Normalbetrieb sind die Schaltkupplungen geöffnet und die zusätzlichen Triebverbindungen sind nicht im Eingriff.

Bevorzugt sind die jeweiligen zusätzlichen Triebverbindungen über ein Nebenantriebsrad auf der Nebenantriebswelle, sowie über eine Zwischenwelle mit zwei Zwischenrädern oder mit einem gestuften Zwischenrad und über je ein Stirnrad mit einem gemeinsamen Stirnrad auf der Eingangswelle verbunden. Wobei die Schaltkupplung jeweils auf der Zwischenwelle angeordnet ist und die Schaltkupplung jeweils das Stirnrad auskuppeln oder einkuppeln kann.

Alternativ kann die jeweilige zusätzliche Triebverbindung über je ein Nebenrad auf der Nebenantriebswelle und je ein Stirnrad auf ein gemeinsames Stirnrad auf der Eingangswelle wirken. Wobei hier die Schaltkupplung jeweils auf der Nebenantriebswelle angeordnet ist und die Schaltkupplung jeweils das Nebenrad auskuppeln oder einkuppeln kann.

Somit ist eine große Flexibilität gegeben, um die Antriebsvorrichtung an gegebenen Randbedingungen optimal anpassen zu können.

In einer weiteren erfindungsgemäßen Ausführung sind die Schaltkupplungen bevorzugt an einem freien Wellenende angeordnet. Das bietet den Vorteil, dass die Ölversorgung für die Schaltkupplung sehr unkompliziert über eine axiale Bohrung in der Welle erfolgen kann.

Für eine bevorzugte Ausführung ist eine Abtriebswelle des Planetengetriebes gleichzeitig auch die Ausgangswelle des Überlagerungsgetriebes. Das ist besonders vorteilhaft, wenn Eingangswelle und Ausgangswelle koaxial angeordnet sein sollen.

Andererseits kann es auch von Vorteil sein, wenn zwischen einer Abtriebswelle des Planetengetriebes und der Ausgangswelle des Überlagerungsgetriebes eine Stirnradstufe angeordnet ist, so dass sich ein Achsversatz zwischen der Eingangswelle und der Ausgangswelle ergibt. Insbesondere für Retrofit-Anwendungen, bei denen eine Antriebsvorrichtung in einer bestehenden Anlage ersetzt werden soll, bietet das weitere Flexibilität für die Anpassung der Vorrichtung an vorgegebene Randbedingungen.

Durch den Achsversatz wird es zudem möglich, dass einer der Nebenantriebe niedriger und damit der erste und der zweite Nebenantrieb auf unterschiedlicher Höhe in z-Richtung angeordnet sind. Obwohl eine zusätzliche Getriebestufe vorgesehen ist, hat sich herausgestellt, dass man mit deutlich geringerem Bauraum auskommen kann und dass sich eine deutlich höhere Flexibilität für die Anpassung an bestehende geometrische Randbedingungen ergibt.

Zusätzlich ist es von Vorteil für die Schwerpunktlage der Vorrichtung, wenn einer der Nebenantriebe tiefer angeordnet ist. Und des Weiteren bietet die erfindungsgemäße Vorrichtung viel mehr Flexibilität bei der Lage der Eingangs- und Ausgangswelle, da nun auch Getrieberegelkupplungen mit Achsversatz ohne aufwändige Umbauten in der Peripherie ersetzt werden können.

Insbesondere ist es bevorzugt, wenn die Hauptantriebsmaschine nur drehzahlkonstant betreibbar ist und die Nebenantriebe drehzahlgeregelt betreibbar sind. Besonders bei großen Antriebsleistungen ermöglicht das eine kostengünstigere Umsetzung. Ein Großteil der Antriebsleistung kann von der konstant betriebenen Hauptantriebsmaschine aufgebracht werden. Diese benötigt keinen Frequenzumformer, was Investitionskosten spart. Bevorzugt wird die Hauptantriebsmaschine als Mittelspannungsmotor ausgeführt, also mit einer Spannung von mehr als 1 kV. Die Drehzahlregelung erfolgt über die Nebenantriebe, die eine geringere Leistung benötigen und die bevorzugt als Niederspannungsmotoren mit einer Spannung von weniger als 1 kV ausgeführt sind. Somit fallen die dafür benötigten Frequenzumformer kleiner und kostengünstiger aus.

Weiterhin ist es vorteilhaft, die Eingangswelle mit dem Hohlrad, die Abtriebswelle mit dem Sonnenrad und die Nebenantriebe über je eine Triebverbindung mit konstanter Übersetzung mit dem Planetenträger zu verbinden. Eine so ausgeführte Vorrichtung ist insbesondere gut geeignet für hohe Drehzahlen am Abtrieb, wie sie beispielsweise bei schnelllaufenden Kompressoren oder bei großen Ventilatoren gefordert sind.

Insbesondere ist es von Vorteil, wenn die zwei Nebenantriebe jeweils über ein Nebenantriebsrad und jeweils über eine Zwischenwelle mit gestuften Zwischenrädern an das Planetengetriebe angekoppelt sind. Das ermöglicht eine besonders flexible Bauraumgestaltung, die unterschiedlichsten geometrischen Randbedingungen genügen kann. Das ist bei bestehenden Anlagen ein wichtiges Kriterium.

Bevorzugt liegen die zwei Nebenantriebe auf der Seite der Hauptantriebsmaschine. Der Vorteil liegt darin, dass auf der Abtriebsseite im Bereich der Arbeitsmaschine keinerlei weiterer Platz für die Antriebsvorrichtung benötigt wird.

Alternativ können die zwei Nebenantriebe auf der Seite der Ausgangswelle, also der Arbeitsmaschine angeordnet sein, wenn beispielsweise auf der Seite der Hauptantriebsmaschine kein geeigneter Bauraum zur Verfügung steht.

Weitere Bauraumeinsparung ist in der Länge der Antriebsvorrichtung möglich, wenn die zwei Nebenantriebe so angeordnet werden, dass sie in der Draufsicht aus z-Richtung überwiegend oder vollständig innerhalb der Gehäuseumrisslinie liegen. Mit dieser Huckepack-Ausführung kann in sehr engen Anlagen dennoch modernisiert werden, da diese Variante besonders kompakt ist.

Um die Montage und Wartung zu vereinfachen, ist es von Vorteil, wenn das Gehäuse durch eine Teilfuge trennbar ausgeführt ist und einen Gehäusedeckel und ein Gehäuseunterteil aufweist. Weiterhin können die zwei Nebenantriebe direkt am Gehäusedeckel angeordnet sein, wobei das Überlagerungsgetriebe und die Teilfuge derart ausgeführt sind, dass der Gehäusedeckel mit den zwei Nebenantrieben demontiert werden kann, während das Gehäuseunterteil mit Hauptantriebsmaschine, Planetengetriebe und Abtriebswelle eingebaut bleiben kann. Das vereinfacht die Montage und Demontage noch zusätzlich.

Anhand von Ausführungsbeispielen werden weitere vorteilhafte Ausprägungen der Erfindung erläutert unter Bezugnahme auf die Zeichnungen. Die genannten Merkmale können nicht nur in der dargestellten Kombination vorteilhaft umgesetzt werden, sondern auch einzeln untereinander kombiniert werden. Die Figuren zeigen im Einzelnen:
- **Fig.1**: erfindungsgemäße Antriebsvorrichtung
- **Fig.2**: weitere erfindungsgemäße Antriebsvorrichtung
- **Fig.3**: noch eine weitere erfindungsgemäße Antriebsvorrichtung
- **Fig.4**: noch eine weitere erfindungsgemäße Antriebsvorrichtungen
- **Fig.5**: erfindungsgemäße Antriebsvorrichtungen mit höhenversetzten Nebenantrieben (Frontansicht)

Nachfolgend werden die Figuren detaillierter beschrieben. Gleiche Bezugszahlen bezeichnen gleiche beziehungsweise analoge Bauteile oder Komponenten.

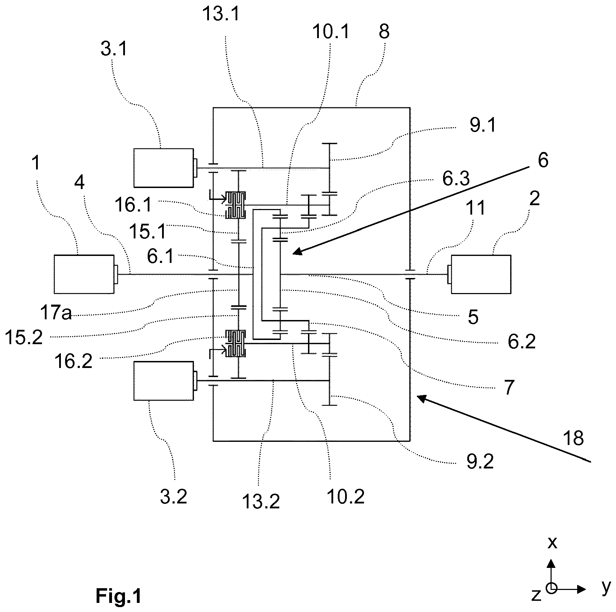

In **Fig.1** ist eine erfindungsgemäße Antriebsvorrichtung in Draufsicht gezeigt, die über die Ausgangswelle 11 an die Arbeitsmaschine 2 angebunden ist. Die Arbeitsmaschine 2 kann beispielsweise eine Pumpe, ein Kompressor, ein Ventilator oder ein Gebläse sein. Es kann auch ein Förderbandantrieb oder eine Mühle oder eine ähnliche Maschine sein. Insbesondere eine Arbeitsmaschine 2 mit großer Leistung, bei der es besonders wichtig ist, einen Antrieb mit hohem Wirkungsgrad zu haben. Aufgrund der Größe des Antriebs ist es dann auch entscheidend, dass der benötigte Bauraum nicht zu groß wird.

Das in der Antriebsvorrichtung vorhandene Überlagerungsgetriebe 18 weist ein Gehäuse 8 auf und umfasst ein Planetengetriebe 6. Die Abtriebswelle 5 des Planetengetriebes ist hier gleichzeitig die Ausgangswelle 11 des Überlagerungsgetriebes. Die Eingangswelle 4 verbindet die Hauptantriebsmaschine 1 mit dem Hohlrad 6.1 des Planetengetriebes und die Abtriebswelle 5 ist an das Sonnenrad 6.2 angeschlossen. Über den Planetenträger 7 mit mehreren Planetenrädern 6.3 erfolgt die Triebverbindung zwischen Hohlrad 6.1 und Sonnenrad 6.2. Am Planetenträger 7 greifen zusätzlich die zwei Nebenantriebe 3.1, 3.2 an.

Dass die Nebenantriebe jeweils über eine separate Triebverbindung ans Planetengetriebe 6 angebunden sind, hat den Vorteil, dass die nötigen Getriebestufen und Komponenten dann kleiner dimensioniert werden können, als wenn beide Nebenantriebe 3.1,3.2 über eine gemeinsame Getriebestufe angebunden sind. Die Triebverbindung erfolgt in dieser Ausführung über je ein Nebenantriebsrad 9.1,9.2, welches auf der Nebenantriebswelle 13.1,13.2 sitzt, und über je eine Zwischenwelle 10.1,10.2 mit jeweils zwei Zwischenrädern, wovon eines in die Außenverzahnung am Planetenträger 7, der als Großrad ausgebildet oder mit einem Großrad verbunden ist, eingreift. Eine besonders bevorzugte Alternative für die Zwischenwelle ist, dass die Triebverbindung über ein gestuftes Zwischenrad 10.1,10.2 erfolgt. Ein Vorteil der hier beschriebenen Gestaltung der Triebverbindungen ist, dass sehr variable Übersetzungen möglich sind und trotzdem viele Komponenten, insbesondere die Gehäuseteile gleich gehalten werden können.

Des Weiteren sind zusätzliche, schaltbare Triebverbindungen zwischen den Nebenantrieben 3.1,3.2 und der Eingangswelle 4 oder der Abtriebswelle 5 vorhanden, die beispielsweise dazu dienen, die Antriebsvorrichtung bei stehender Hauptantriebsmaschine 1 mit Hilfe der Nebenantriebe 3.1,3.2 zu starten oder bei kleiner Drehzahl zu betreiben oder um bei ausgefallener Hauptantriebsmaschine 1 einen kontrollierten Notbetrieb beziehungsweise ein kontrolliertes Herunterfahren zu ermöglichen.

In allen erfindungsgemäßen Ausführungen bleibt die Triebverbindung zwischen Nebenantrieben und Planetenträger bestehen, unabhängig davon ob die Schaltkupplungen eingekuppelt oder ausgekuppelt sind.

Auf der verlängerten Zwischenwelle 10.1,10.2 sitzt, über die jeweilige Schaltkupplung 16.1,16.2 verbunden, je ein Stirnrad 15.1,15.2, welches in das Stirnrad 17a auf der Eingangswelle eingreift. Um diese zusätzlichen Triebverbindungen zwischen Nebenantrieben 3.1,3.2 und der Eingangswelle 4 zu schalten, werden die Schaltkupplungen 16.1,16.2 betätigt. Im Normalbetrieb sind die Schaltkupplungen 16.1,16.2 ausgekuppelt. Im Notbetrieb, beim kontrollierten Nothalt oder beim Betrieb mit kleiner Drehzahl oder zum Anfahren können die Schaltkupplungen geschlossen werden, so dass die zusätzlichen Triebverbindungen in Eingriff kommen. Je nach Bedarf kann auch nur ein Nebenantrieb eingekuppelt werden.

Dadurch dass auch diese zusätzliche Triebverbindung für jeden Nebenantrieb 3.1,3.2 separat vorhanden ist, können wiederum die Schaltkupplungen sowie weitere Komponenten kleiner und damit günstiger und bauraumsparender ausgelegt werden.

In der dargestellten Ausführung sind die Schaltkupplungen 16.1,16.2 am freien Wellenende auf der verlängerten Zwischenwelle 10.1,10.2 angeordnet. Das bietet den Vorteil, dass die Ölversorgung für die Schaltkupplungen über axiale Bohrungen in der Zwischenwelle 10.1,10.2 sehr unkompliziert möglich ist.

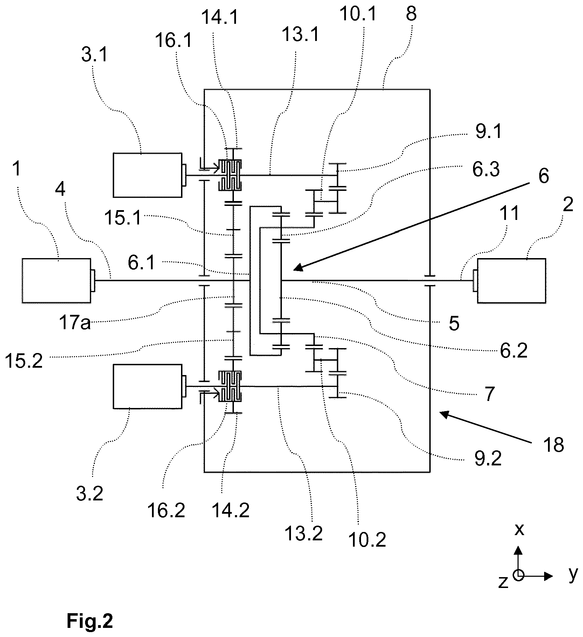

Bei der in **Fig.2** gezeigten Variante sitzen die Schaltkupplungen 16.1,16.2 direkt auf der jeweiligen Nebenantriebswelle 13.1,13.2. Die an der Schaltkupplung 16.1,16.2 angeschlossenen Nebenräder 14.1,14.2 greifen jeweils in das Zwischenrad 15.1,15.2 ein, welche auf das gemeinsame Stirnrad 17a auf der Eingangswelle 4 wirken. Der Vorteil dieser Ausführung ist unter anderem, dass keine verlängerten Zwischenwellen notwendig sind, sondern direkt über einfache Stirnradstufen auf die Eingangswelle 4 eingewirkt werden kann.

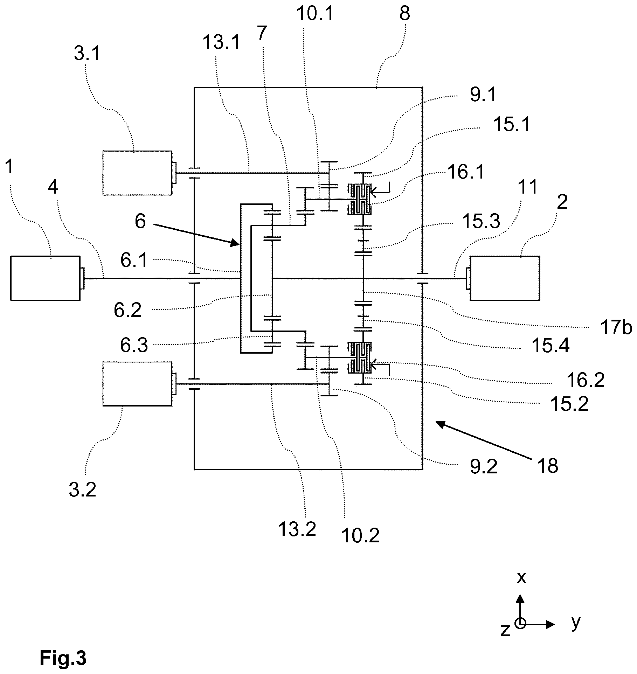

**Fig.3** stellt eine erfindungsgemäße Ausführung dar, bei der die zusätzlichen, schaltbaren Triebverbindungen zwischen den Nebenantrieben 3.1,3.2 und der Abtriebswelle 5 des Planetengetriebes vorhanden ist. Die Schaltkupplungen 16.1,16.2 sitzen wie beim ersten Ausführungsbeispiel auf der verlängerten Zwischenwelle 10.1,10.2, allerdings diesmal am freien Wellenende das zur Abtriebsseite hinweist. Mit den Schaltkupplungen verbunden sind die Stirnräder 15.1,15.2. Über je ein weiteres Stirnrad 15.3,15.4 wirken die Triebverbindungen auf ein gemeinsames Stirnrad 17b auf der Abtriebswelle.

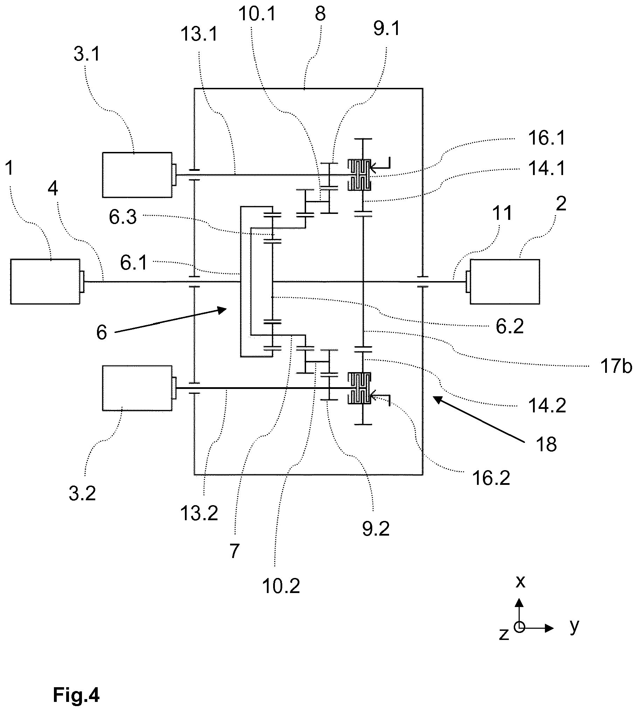

In **Fig.4** wird wiederum eine Variante mit zusätzlicher Triebverbindung zwischen den Nebenantrieben 3.1,3.2 und der Abtriebswelle 5 des Planetengetriebes.

Die Schaltkupplungen 16.1,16.2 sitzen jeweils auf der verlängerten Nebenantriebswelle 13.1,13.2 und tragen je ein Nebenrad 14.1,14.2, welche in das gemeinsame Stirnrad 17b auf der Abtriebswelle 5 eingreifen. Auch hier befinden sich die Schaltkupplungen 16.1,16.2 am freien Wellenende, was eine unkomplizierte Schmierölzufuhr erlaubt.

Diese Ausführung ist besonders geeignet für Anwendungen, bei denen die Arbeitsmaschine 2 bei nicht zu großen Drehzahlen betrieben wird.

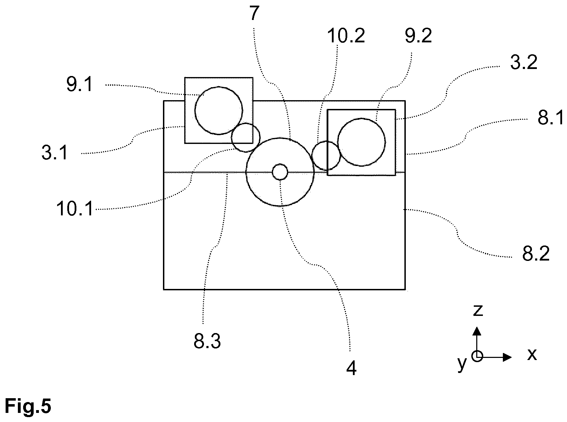

In der Frontansicht in **Fig.5** ist die Kompaktheit der Ausführung gut zu erkennen. Das Gehäuse 8 ist durch eine Teilungsfuge 8.3 in einen Gehäusedeckel 8.1 und ein Gehäuseunterteil 8.2 geteilt ist. Die Nebenantriebe 3.1,3.2 sind beide am Gehäusedeckel 8.1 angebracht Das bietet Vorteile bei der Montage und auch bei der Konstruktion, da der Gehäusedeckel 8.1, mit den darin gelagerten Komponenten, unabhängig vom gewünschten Achsversatz immer gleichartig ausgeführt werden kann.

In dieser bevorzugten Ausführung ist der zweite Nebenantrieb 3.2 in z-Richtung tiefer positioniert als der erste Nebenantrieb 3.1. Der erste Nebenantrieb ist auf der Seite vorhanden, zu der der Achsversatz der Ausgangswelle 11 vorgesehen ist. Durch den Achsversatz ergibt sich genug Platz, um den zweiten Nebenantrieb 3.2 vorteilhafterweise abzusenken. In einer weiteren Option könnte der zweite Nebenantrieb 3.2 auch am Gehäuseunterteil 8.2 angeordnet werden.

Gut zu erkennen sind wiederum die separaten Triebverbindungen über die Zahnräder 9.1,10.1 und 9.2,10.2 zwischen den Nebenantrieben 3.1,3.2 und dem als Großrad ausgebildeten oder mit einem Großrad verbundenen Planetenträger 7. Die weiteren Komponenten des Planetengetriebes 6 und die Stirnradstufe 12, sowie die Ausgangswelle 11 sind nicht dargestellt.

Wenn es auch nicht explizit dargestellt ist, kann dennoch für alle Ausführungen eine Stirnradstufe vorgesehen werden, die aus zwei Stirnrädern gebildet wird und die die Abtriebswelle 5 des Planetengetriebes mit der Ausgangswelle 11 der Antriebsvorrichtung verbindet. Durch die Stirnradstufe kann ein Achsversatz zwischen der Eingangswelle 4 und der Ausgangswelle 11 sehr flexibel je nach Anforderung ausgeführt werden. Der Achsversatz kann nicht nur in x-Richtung, sondern auch in Grenzen in z-Richtung vorhanden sein. So lässt sich die Antriebsvorrichtung gut an bestehende Verhältnisse zum Beispiel bei der Nachrüstung in bestehenden Anlagen anpassen.

### Bezugszeichenliste

- 1: Hauptantriebsmaschine
- 2: Arbeitsmaschine
- 3.1, 3.2: erster und zweiter Nebenantrieb
- 4: Eingangswelle
- 5: Abtriebswelle
- 6: Planetengetriebe
- 6.1: Hohlrad
- 6.2: Sonnenrad
- 6.3: Planetenräder
- 7: Planetenträger
- 8: Gehäuse
- 8.1: Gehäusedeckel
- 8.2: Gehäuseunterteil
- 8.3: Teilungsfuge
- 9.1, 9.2: erstes und zweites Nebenantriebsrad
- 10.1, 10.2: erste und zweite Zwischenwelle mit Zwischenrädern (oder erstes und zweites gestuftes Zwischenrad)
- 11: Ausgangswelle
- 12: Stirnradstufe
- 13.1, 13.2: erste und zweite Nebenantriebswelle
- 14.1, 14.2: erstes und zweites Nebenrad
- 15.1, 15.2: erstes und zweites Stirnrad
- 15.3, 15.4: weitere Stirnräder
- 16.1, 16.2: erste und zweite Schaltkupplung
- 17a: Stirnrad auf Eingangswelle
- 17b: Stirnrad auf der Abtriebswelle
- 18: Überlagerungsgetriebe
- x: Breite
- y: Länge
- z: Höhenrichtung

## Patentansprüche

1. Antriebsvorrichtung umfassend ein Überlagerungsgetriebe (18) mit einem Planetengetriebe (6) und einem Gehäuse (8), eine Hauptantriebsmaschine (1), die mit einer Eingangswelle (4) des Überlagerungsgetriebes verbunden ist, zwei Nebenantriebe (3.1,3.2), die über je eine Triebverbindung (9.1,10.1, 9.2,10.2) mit dem Planetengetriebe (6) verbunden sind, eine Ausgangswelle (11) des Überlagerungsgetriebes, welche mit einer Arbeitsmaschine (2) verbunden werden kann, wobei das Planetengetriebe (6) ein Hohlrad (6.1), ein Sonnenrad (6.2), einen Planetenträger (7) und mehrere Planetenrädern (6.3) aufweist,
**dadurch gekennzeichnet,**
**dass** zwischen den Nebenantrieben (3.1,3.2) und der Eingangswelle (4) oder zwischen den Nebenantrieben (3.1,3.2) und einer Abtriebswelle (5) des Planetengetriebes je Nebenantrieb eine zusätzliche Triebverbindung mit konstanter Übersetzung besteht, welche so ausgeführt sind, dass diese über je eine vorhandene Schaltkupplung (16.1,16.2) getrennt oder verbunden werden können, wobei die Triebverbindungen (9.1,10.1, 9.2,10.2) von den Nebenantrieben (3.1,3.2) zum Überlagerungsgetriebe in jedem Fall verbunden bleiben.

2. Vorrichtung nach Anspruch 1
**dadurch gekennzeichnet,**
**dass** die jeweilige zusätzliche Triebverbindung über ein Nebenantriebsrad (9.1,9.2), sowie über eine Zwischenwelle (10.1,10.2) mit zwei Zwischenrädern oder mit einem gestuften Zwischenrad (10.1,10.2) auf je ein Stirnrad (15.1,15.2) und über dieses auf ein gemeinsames Stirnrad (17a) auf der Eingangswelle wirkt, wobei die Schaltkupplung (16.1,16.2) jeweils auf der Zwischenwelle (10.1,10.2) angeordnet ist und die Schaltkupplung jeweils das Stirnrad (15.1,15.2) auskuppeln oder einkuppeln kann.

3. Vorrichtung nach Anspruch 1
**dadurch gekennzeichnet,**
**dass** die jeweilige zusätzliche Triebverbindung über je ein Nebenrad (14.1,14.2) auf der Nebenantriebswelle und je ein Stirnrad (15.1,15.2) auf ein gemeinsames Stirnrad (17a) auf der Eingangswelle wirkt, wobei die Schaltkupplung (16.1,16.2) jeweils auf der Nebenantriebswelle (13.1,13.2) angeordnet ist und die Schaltkupplung jeweils das Nebenrad (14.1,14.2) auskuppeln oder einkuppeln kann.

4. Vorrichtung nach einem der vorherigen Ansprüche
**dadurch gekennzeichnet,**
**dass** die Schaltkupplungen (16.1,16.2) an einem freien Wellenende angeordnet sind.

5. Vorrichtung nach einem der vorherigen Ansprüche
**dadurch gekennzeichnet,**
**dass** eine Abtriebswelle (5) des Planetengetriebes die Ausgangswelle (11) des Überlagerungsgetriebes bildet.

6. Vorrichtung nach einem der Ansprüche 1 bis 4
**dadurch gekennzeichnet,**
**dass** zwischen einer Abtriebswelle (5) des Planetengetriebes und der Ausgangswelle (11) eine Stirnradstufe angeordnet ist, so dass sich ein Achsversatz zwischen der Eingangswelle (4) und der Ausgangswelle (11) ergibt.

7. Vorrichtung nach einem der vorherigen Ansprüche
**dadurch gekennzeichnet,**
**dass** der erste und der zweite Nebenantrieb (3.1,3.2) auf unterschiedlicher Höhe in z-Richtung angeordnet sind.

8. Vorrichtung nach einem der vorherigen Ansprüche
**dadurch gekennzeichnet,**
**dass** die Hauptantriebsmaschine (2) nur drehzahlkonstant betreibbar ist und die Nebenantriebe (3.1,3.2) drehzahlgeregelt betreibbar sind.

9. Vorrichtung nach einem der vorherigen Ansprüche
**dadurch gekennzeichnet,**
**dass** die Eingangswelle (4) mit dem Hohlrad (6.1), die Abtriebswelle (5) und somit die Ausgangswelle (11) mit dem Sonnenrad (6.2) und die Nebenantriebe (3.1,3.2) über eine Triebverbindung (9.1,10.1,9.2,10.2) mit konstanter Übersetzung mit dem Planetenträger (7) verbunden sind.

10. Vorrichtung nach einem der vorherigen Ansprüche
**dadurch gekennzeichnet,**
**dass** die zwei Nebenantriebe (3.1,3.2) jeweils über ein Nebenantriebsrad (9.1,9.2) und jeweils über eine Zwischenwelle (10.1,10.2) mit je zwei Zwischenrädern oder über je ein gestuftes Zwischenrad (10.1.,10.2) an das Planetengetriebe (6) angekoppelt sind.

11. Vorrichtung nach einem der vorherigen Ansprüche
**dadurch gekennzeichnet,**
**dass** die zwei Nebenantriebe (3.1,3.2) auf der Seite der Hauptantriebsmaschine (1) angeordnet sind.

12. Vorrichtung nach einem der vorherigen Ansprüche
**dadurch gekennzeichnet,**
**dass** das Gehäuse (8) durch eine Teilfuge (8.3) trennbar ausgeführt ist und einen Gehäusedeckel (8.1) und ein Gehäuseunterteil (8.2) aufweist.

13. Vorrichtung nach Anspruch 12
**dadurch gekennzeichnet,**
**dass** die zwei Nebenantriebe (3.1,3.2) am Gehäusedeckel (8.1) angeordnet sind und dass das Überlagerungsgetriebe (13) und die Teilfuge (8.3) derart ausgeführt sind, dass der Gehäusedeckel (8.1) mit den zwei Nebenantrieben (3.1,3.2) demontiert werden kann, während das Gehäuseunterteil (8.2) mit Hauptantriebsmaschine (1), Planetengetriebe (6) und Abtriebswelle (5) eingebaut bleiben kann.

## Claims

1. Drive device comprising a speed modulation gearbox (18) having a planetary gear mechanism (6) and a casing (8), a main drive machine (1) which is connected to an input shaft (4) of the speed modulation gearbox, two auxiliary drives (3.1, 3.2), which are each connected to the planetary gear mechanism (6) via a drive connection (9.1, 10.1, 9.2, 10.2), and an output shaft (11) of the speed modulation gearbox which can be connected to a working machine (2), wherein the planetary gear mechanism (6) comprises a ring gear (6.1), a sun gear (6.2), a planet carrier (7) and several planet gears (6.3),
**characterized in that**
for each auxiliary drive, an additional drive connection with a constant transmission ratio exists between the auxiliary drives (3.1, 3.2) and the input shaft (4) or between the auxiliary drives (3.1, 3.2) and a driven shaft (5) of the planetary gear mechanism, wherein said additional drive connections are configured such that they can each be engaged or disengaged by means of a respective switching clutch (16.1, 16.2), wherein the drive connections (9.1, 10.1, 9.2, 10.2) from the auxiliary drives (3.1, 3.2) to the speed modulation gearbox remain engaged in any case.

2. Device according to Claim 1,
**characterized in that**
the respective additional drive connection acts via an auxiliary drive gear (9.1, 9.2), and via an intermediate shaft (10.1, 10.2) with two intermediate gears or with a stepped intermediate gear (10.1, 10.2) on a respective spur gear (15.1, 15.2), and via this on a common spur gear (17a) on the input shaft, wherein the switching clutch (16.1, 16.2) is arranged on the respective intermediate shaft (10.1, 10.2) and the switching clutch can disengage or engage the respective spur gear (15.1, 15.2).

3. Device according to Claim 1,
**characterized in that**
the respective additional drive connection acts via a respective auxiliary gear (14.1, 14.2) on the auxiliary drive shaft and via a respective spur gear (15.1, 15.2) on a common spur gear (17a) on the input shaft, wherein the switching clutch (16.1, 16.2) is arranged on the respective auxiliary drive shaft (13.1, 13.2) and the switching clutch can disengage or engage the respective auxiliary gear (14.1, 14.2).

4. Device according to any of the preceding claims,
**characterized in that**
the switching clutches (16.1, 16.2) are arranged on a free shaft end.

5. Device according to any of the preceding claims,
**characterized in that**
a driven shaft (5) of the planetary gear mechanism forms the output shaft (11) of the speed modulation gearbox.

6. Device according to any of Claims 1 to 4,
**characterized in that**
a spur gear stage is arranged between a driven shaft (5) of the planetary gear mechanism and the output shaft (11), so that an axial offset exists between the input shaft (4) and the output shaft (11).

7. Device according to any of the preceding claims,
**characterized in that**
the first and second auxiliary drives (3.1, 3.2) are arranged at different heights in the z-direction.

8. Device according to any of the preceding claims,
**characterized in that**
the main drive machine (2) can be operated only at constant rotation speed, and the auxiliary drives (3.1, 3.2) can be operated with regulated rotation speed.

9. Device according to any of the preceding claims,
**characterized in that**
the input shaft (4) is connected to the ring gear (6.1), the driven shaft (5) and hence the output shaft (11) are connected to the sun gear (6.2), and the auxiliary drives (3.1, 3.2) are connected to the planet carrier (7) via a drive connection (9.1, 10.1, 9.2, 10.2) with constant transmission ratio.

10. Device according to any of the preceding claims,
**characterized in that**
the two auxiliary drives (3.1, 3.2) are coupled to the planetary gear mechanism (6) via a respective auxiliary drive gear (9.1, 9.2) and via a respective intermediate shaft (10.1, 10.2) each with two intermediate gears or via a respective stepped intermediate gear (10.1, 10.2) .

11. Device according to any of the preceding claims,
**characterized in that**
the two auxiliary drives (3.1, 3.2) are arranged on the side of the main drive machine (1).

12. Device according to any of the preceding claims,
**characterized in that**
the casing (8) is designed so as to be separable via a separation joint (8.3) and comprises a casing cover (8.1) and a casing lower part (8.2).

13. Device according to Claim 12,
**characterized in that**
the two auxiliary drives (3.1, 3.2) are arranged on the casing cover (8.1) and the speed modulation gearbox (13) and the separation joint (8.3) are configured such that the casing cover (8.1) with the two auxiliary drives (3.1, 3.2) can be removed, while the casing lower part (8.2) with the main drive machine (1), planetary gear mechanism (6) and driven shaft (5) may remain installed.

## Revendications

1. Dispositif d'entraînement comportant une transmission à superposition (18) dotée d'un engrenage planétaire (6) et d'un boîtier (8), une machine d'entraînement principale (1), qui est reliée à un arbre d'entrée (4) de la transmission à superposition, deux entraînements auxiliaires (3.1, 3.2), qui sont reliés à l'engrenage planétaire (6) par le biais d'une liaison d'entraînement respective (9.1, 10.1, 9.2, 10.2), un arbre de sortie (11) de la transmission à superposition, lequel peut être relié à une machine de travail (2), l'engrenage planétaire (6) comprenant une couronne (6.1), un pignon planétaire (6.2), un porte-satellites (7) et plusieurs pignons satellites (6.3),
**caractérisé en ce**
**qu'**entre les entraînements auxiliaires (3.1, 3.2) et l'arbre d'entrée (4) ou entre les entraînements auxiliaires (3.1, 3.2) et un arbre mené (5) de l'engrenage planétaire, pour chaque entraînement auxiliaire, il existe une liaison d'entraînement supplémentaire présentant un rapport de transmission constant, lesquelles liaisons d'entraînement supplémentaires sont réalisées de telle sorte que celles-ci peuvent être séparées ou reliées par le biais d'un embrayage de changement de vitesses (16.1, 16.2) existant respectif, les liaisons d'entraînement (9.1, 10.1, 9.2, 10.2) à partir des entraînements auxiliaires (3.1, 3.2) jusqu'à la transmission à superposition demeurant reliées dans chaque cas.

2. Dispositif selon la revendication 1,
**caractérisé en ce que**
la liaison d'entraînement supplémentaire respective agit respectivement sur un pignon droit (15.1, 15.2) et par le biais de celui-ci sur un pignon droit commun (17a) sur l'arbre d'entrée par le biais d'un pignon d'entraînement auxiliaire (9.1, 9.2), ainsi que par le biais d'un arbre intermédiaire (10.1, 10.2) doté de deux pignons intermédiaires d'un pignon intermédiaire étagé (10.1, 10.2), l'embrayage de changement de vitesses (16.1, 16.2) étant disposé respectivement sur l'arbre intermédiaire (10.1, 10.2) et l'embrayage de changement de vitesses pouvant respectivement accoupler et désaccoupler le pignon droit (15.1, 15.2).

3. Dispositif selon la revendication 1,
**caractérisé en ce que**
la liaison d'entraînement supplémentaire respective agit par le biais d'un pignon auxiliaire (14.1, 14.2) respectif sur l'arbre d'entraînement auxiliaire, et par le biais d'un pignon droit (15.1, 15.2) respectif sur un pignon droit commun (17a) sur l'arbre d'entrée, l'embrayage de changement de vitesses (16.1, 16.2) étant disposé respectivement sur l'arbre d'entraînement auxiliaire (13.1, 13.2) et l'embrayage de changement de vitesses pouvant respectivement accoupler ou désaccoupler le pignon auxiliaire (14.1, 14.2).

4. Dispositif selon l'une des revendications précédentes,
**caractérisé en ce que**
les embrayages de changement de vitesses (16.1, 16.2) sont disposés à une extrémité libre d'arbre.

5. Dispositif selon l'une des revendications précédentes,
**caractérisé en ce**
**qu'**un arbre mené (5) de l'engrenage planétaire forme l'arbre de sortie (11) de la transmission à superposition.

6. Dispositif selon l'une des revendications 1 à 4,
**caractérisé en ce**
**qu'**un étage à pignons droits est disposé entre un arbre mené (5) de l'engrenage planétaire et l'arbre de sortie (11), de sorte qu'il en résulte un décalage axial entre l'arbre d'entrée (4) et l'arbre de sortie (11).

7. Dispositif selon l'une des revendications précédentes,
**caractérisé en ce que**
le premier et le deuxième entraînement auxiliaire (3.1, 3.2) sont disposés à différentes hauteurs dans la direction z.

8. Dispositif selon l'une des revendications précédentes,
**caractérisé en ce que**
la machine d'entraînement principale (2) ne peut fonctionner qu'à régime constant et les entraînements auxiliaires (3.1, 3.2) peuvent fonctionner à régime régulé.

9. Dispositif selon l'une des revendications précédentes,
**caractérisé en ce que**
l'arbre d'entrée (4) est relié à la couronne (6.1), l'arbre mené (5) et donc l'arbre de sortie (11) sont reliés au pignon planétaire (6.2) et les entraînements auxiliaires (3.1, 3.2) sont reliés au porte-satellites (7) par le biais d'une liaison d'entraînement (9.1, 10.1, 9.2, 10.2) à rapport de transmission constant.

10. Dispositif selon l'une des revendications précédentes,
**caractérisé en ce que**
les deux entraînements auxiliaires (3.1, 3.2) sont accouplés à l'engrenage planétaire (6) respectivement par le biais d'un pignon d'entraînement auxiliaire (9.1, 9.2) et respectivement par le biais d'un arbre intermédiaire (10.1, 10.2) comprenant respectivement deux pignons intermédiaires ou par le biais d'un pignon intermédiaire étagé (10.1, 10.2) respectif.

11. Dispositif selon l'une des revendications précédentes,
**caractérisé en ce que**
les deux entraînements auxiliaires (3.1, 3.2) sont disposés sur le côté de la machine d'entraînement principale (1).

12. Dispositif selon l'une des revendications précédentes,
**caractérisé en ce que**
le boîtier (8) est réalisé de manière à pouvoir être séparé par un joint de séparation (8.3) et comprend un couvercle de boîtier (8.1) et une partie inférieure de boîtier (8.2).

13. Dispositif selon la revendication 12,
**caractérisé en ce que**
les deux entraînements auxiliaires (3.1, 3.2) sont disposés sur le couvercle de boîtier (8.1) et **en ce que** la transmission à superposition (13) et le joint de séparation (8.3) sont réalisés de telle sorte que le couvercle de boîtier (8.1) avec les deux entraînements auxiliaires (3.1, 3.2) peut être démonté, tandis que la partie inférieure de boîtier (8.2) avec la machine d'entraînement principale (1), l'engrenage planétaire (6) et l'arbre mené (5) peut demeurer installée.
